(19) Europäisches Patentamt
European Patent Office
Office européen des brevets

(11) EP 4 464 747 A1

(12) **EUROPEAN PATENT APPLICATION**
published in accordance with Art. 153(4) EPC

(43) Date of publication:
**20.11.2024 Bulletin 2024/47**

(21) Application number: **23740216.9**

(22) Date of filing: **06.01.2023**

(51) International Patent Classification (IPC):
***C08L 77/06*** *(2006.01)* ***C08G 69/26*** *(2006.01)*
***C08K 7/14*** *(2006.01)*

(52) Cooperative Patent Classification (CPC):
**C08G 69/26; C08K 7/14; C08L 77/06**

(86) International application number:
**PCT/JP2023/000145**

(87) International publication number:
**WO 2023/136207 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.01.2022 JP 2022003322**

(71) Applicant: **Mitsui Chemicals, Inc.**
**Tokyo 104-0028 (JP)**

(72) Inventors:
- **UEDA, Kosuke**
  **Chiba 299-0265 (JP)**
- **MAKIGUCHI, Wataru**
  **Chiba 299-0265 (JP)**
- **DOI, Haruka**
  **Chiba 299-0265 (JP)**
- **NISHINO, Kohei**
  **Chiba 299-0265 (JP)**
- **WASHIO, Isao**
  **Chiba 299-0265 (JP)**
- **KONDO, Takahiro**
  **Chiba 299-0265 (JP)**

(74) Representative: **Hoffmann Eitle**
**Patent- und Rechtsanwälte PartmbB**
**Arabellastraße 30**
**81925 München (DE)**

(54) **POLYAMIDE RESIN COMPOSITION AND POLYAMIDE MOLDED BODY**

(57) A polyamide resin composition comprising a polyamide resin and glass fibers containing a surface treatment agent or a convergence agent. The surface treatment agent or convergence agent contains an acidic group. The polyamide resin contains a dicarboxylic acid-derived component unit (a) and a diamine-derived component unit (b), wherein: the dicarboxylic acid-derived component unit (a) contains a component unit derived from an aromatic dicarboxylic acid or an alicyclic dicarboxylic acid; and the diamine-derived component unit (b) contains a component unit (b2) derived from a diamine represented by formula (1) in an amount of 10 mol% or more and less than 50 mol% relative to the total mole number of the diamine-derived component unit (b).

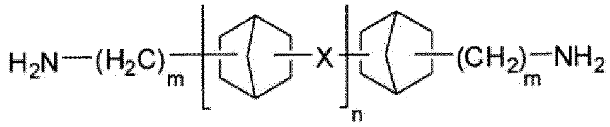

… Formula (1)

EP 4 464 747 A1

## Description

Technical Field

The present disclosure relates to a polyamide resin composition and a polyamide molded article.

Background Art

Polyamide resin compositions have excellent moldability, mechanical properties, and chemical resistance and therefore have been widely used as materials for various applications such as clothing, industrial materials, automobiles, electrical/electronic parts, and industrial parts.

Various additives are added to the polyamide resin compositions used for these applications in order to develop characteristics suitable for respective applications. For example, it is known to add reinforcing materials such as glass fibers to increase the impact resistance and rigidity of polyamide resin compositions.

Such glass fibers may be treated with a sizing agent or a surface treatment agent for the purpose of increasing dispersibility in a polyamide resin. For example, Patent Literature (hereinafter, referred to as PTL) 1 discloses a glass fiber sizing agent having a weight average molecular weight of 10,000 to 60,000 and containing a copolymer compound obtained by copolymerizing 20 to 60 mass% of an unsaturated dicarboxylic acid or carboxylic acid anhydride, 20 to 75 mass% of methyl acrylate, and 5 to 20 mass% of methyl methacrylate, aminosilane, and a polyurethane resin. PTL 1 discloses that the sizing agent can increase the mechanical strength (in particular, tensile strength) of the polyamide resin when glass fibers are added thereto.

In addition, attempts have been made to change the physical properties of a polyamide resin by changing the materials of the polyamide resin. For example, PTL 2 discloses that in the production of a polyamide by polycondensing a diamine component and a dicarboxylic acid component, bis-aminomethyl-norbornane is used as the diamine component. PTL 2 also discloses that a polyamide obtained from equimolar amounts of bis-aminomethyl-norbornane and 2-methylpentamethylene as the diamine component is transparent and has a high freezing point. PTL 2 further discloses that to increase the transparency of the polyamide, the diamine component is selected so that no crystallization takes place during the cooling.

PTL 3 discloses that as the diamine component, a mixture of equal amounts of 2,5-bis-aminomethyl-norbornane and 2,6-bis-aminomethyl-norbornane is used as a portion of hexamethylene diamine with the molar ratio of the mixture of 20 mol% or less. PTL 3 teaches that such a configuration can obtain a polyamide that is transparent and has a high transition temperature.

PTL 4 discloses that as a diamine component, the proportion of added bis-aminomethyl-norbornane is set to 17 wt% or more. Specifically, PTL 4 discloses that a polyamide obtained by mixing hexamethylene diamine and bis-aminomethyl-norbornane in a weight ratio (hexamethylene diamine/ bis-aminomethyl-norbornane) of 30/70 (36/64 in molar ratio) has a high glass transition temperature.

Citation List

Patent Literature

PTL 1
Japanese Patent Application Laid-Open No. 2014-231452
PTL 2
Japanese Patent Application Laid-Open No. S48-60193
PTL 3
Japanese Patent Application Laid-Open No. S53-125497
PTL 4
Japanese Patent Application Laid-Open No. S63-154739

Summary of Invention

Technical Problem

The sizing agent described in PTL 1 has a carboxy group derived from an unsaturated dicarboxylic acid or a carboxylic acid anhydride. According to the new findings of the present inventors, when glass fibers treated with a sizing

agent having such a carboxy group are added to a polyamide resin composition, the fluidity of the polyamide resin composition may decrease. Similar decrease in the fluidity is also observed when glass fibers treated with another sizing agent or surface treatment agent each having an acidic group are added to the polyamide resin composition.

In view of these circumstances, an object of the present disclosure is to provide a polyamide resin composition capable of preventing a decrease in fluidity that would be caused by addition of glass fibers treated with a sizing agent or surface treatment agent each having an acidic group. Another object of the present disclosure is to provide a polyamide molded article containing the polyamide resin composition.

Solution to Problem

[1] A polyamide resin composition, containing: a polyamide resin at a content of 20 mass% or more and 85 mass% or less based on a total mass of the polyamide resin composition; and a glass fiber at a content of 15 mass% or more and 70 mass% or less based on the total mass of the polyamide resin composition, the glass fiber containing a surface treatment agent or a sizing agent, wherein

the surface treatment agent or the sizing agent has an acidic group, the polyamide resin contains a dicarboxylic acid-derived component unit (a) and a diamine-derived component unit (b), the dicarboxylic acid-derived component unit (a) contains a component unit derived from an aromatic dicarboxylic acid or an alicyclic dicarboxylic acid, and the diamine-derived component unit (b) contains a component unit (b 1) derived from an alkylene diamine having 4 to 18 carbon atoms at a content of more than 50 mol% and 90 mol% or less based on a total number of moles of the diamine-derived component unit (b), and a component unit (b2) derived from a diamine represented by Formula (1) below at a content of 10 mol% or more and less than 50 mol% based on the total number of moles of the diamine-derived component unit (b):

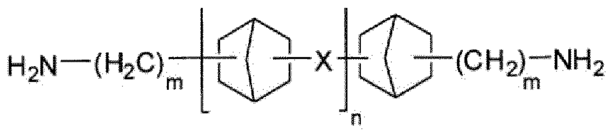

Formula (1)

wherein, m and n are each independently 0 or 1, and -X- is a single bond or a divalent group selected from the group consisting of -O-, -S-, $-SO_2-$, -CO- and $-CH_2-$.

[2] The polyamide resin composition according to [1], wherein the acidic group of the surface treatment agent or the sizing agent is a carboxy group, an acid anhydride group, or a carboxylic ester group.

[3] The polyamide resin composition according to [1], wherein the polyamide resin contains the component unit (b2) derived from the diamine represented by the Formula (1) at a content of 10 mol% or more and less than 45 mol% based on the total number of moles of the diamine-derived component unit (b).

[4] The polyamide resin composition according to [1], wherein the component unit (b1) derived from the alkylene diamine having 4 to 18 carbon atoms contains a component unit derived from a linear alkylene diamine or a branched alkylene diamine.

[5] The polyamide resin composition according to [4], wherein the linear alkylene diamine or the branched alkylene diamine is a diamine selected from the group consisting of 1,4-diaminobutane, 1,6-diaminohexane, 1,9-diaminononane, 1,10-diaminodecane, 2-methyl-1,5-pentanediamine, and 2-methyl-1,8-octanediamine.

[6] The polyamide resin composition according to [1], wherein the aromatic dicarboxylic acid or the alicyclic dicarboxylic acid is terephthalic acid, naphthalene dicarboxylic acid, or cyclohexane dicarboxylic acid.

[7] The polyamide resin composition according to [1], wherein the polyamide resin has a melting point (Tm) of 280°C or more.

[8] The polyamide resin composition according to [1], wherein the polyamide resin is a crystalline polyamide resin.

[9] The polyamide resin composition according to [1], wherein the polyamide resin has a heat of fusion (ΔH) of 10 mJ/mg or more.

[10] The polyamide resin composition according to any one of [1] to [9], wherein the polyamide resin composition is a resin composition for an in-vehicle member.

[11] A polyamide molded article, comprising: the polyamide resin composition according to any one of [1] to [9].

[12] The polyamide molded article according to [11], wherein the polyamide molded article is an in-vehicle member.

Advantageous Effects of Invention

The present disclosure can provide a polyamide resin composition capable of preventing a decrease in fluidity that would be caused by addition of glass fibers treated with a sizing agent or surface treatment agent each having an acidic group and provide a polyamide molded article containing the polyamide resin composition.

Description of Embodiments

1. Polyamide Resin Composition

The polyamide resin composition is a resin composition whose resin component contains a polyamide resin as its main component. A polyamide resin being a main component means that the proportion of the polyamide resin in the resin component is 50 mass% or more. The proportion of the polyamide resin in the resin component is preferably 60 mass% or more, more preferably 70 mass% or more, even more preferably 80 mass% or more, and particularly preferably 90 mass% or more. The upper limit of the proportion of the polyamide resin in the resin component is not limited, but may be 100 mass% or less, and may be 90 mass% or less or 80 mass% or less.
The proportion of the polyamide resin contained in the polyamide resin composition is preferably 20 mass% or more and 85 mass% or less based on the total mass of the polyamide resin composition.

1-1. Polyamide Resin

The polyamide resin contains a component unit (a) derived from a dicarboxylic acid (herein also simply referred to as "dicarboxylic acid-derived component unit (a)") and a component unit (b) derived from a diamine (herein also simply referred to as "diamine-derived component unit (b)"). For adjusting the melting point (Tm) and glass transition temperature (Tg) of the polyamide resin to fall within the ranges, the dicarboxylic acid-derived component unit (a) preferably contains a component unit derived from an aromatic dicarboxylic acid or alicyclic dicarboxylic acid; and the diamine-derived component unit (b) preferably contains a component unit (b1) derived from an alkylene diamine having 4 or more and 18 or less (herein also simply referred to as "4 to 18") carbon atoms and a component unit (b2) derived from a diamine represented by Formula (1) below-the amount of the component unit (b1) is more than 50 mol% and 90 mol% or less based on the total number of moles of the diamine-derived component unit (b), and the amount of the component unit (b2) is 10 mol% or more and less than 50 mol% based on the total number of moles of the diamine-derived component unit (b):

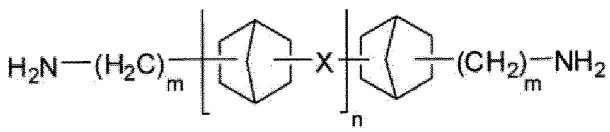

... Formula (1)

(in Formula (1),
m and n are each independently 0 or 1, and
-X- is a single bond or a divalent group selected from the group consisting of -O-, -S-, $-SO_2-$, -CO- and $-CH_2-$).

[Dicarboxylic Acid-derived Component Unit (a)]

When a polyamide resin contains a component unit derived from an aromatic dicarboxylic acid or an alicyclic dicarboxylic acid as the dicarboxylic acid-derived component unit (a), the melting point (Tm) and crystallinity of the polyamide resin can be satisfactorily increased.
Examples of the aromatic dicarboxylic acid include terephthalic acid and naphthalene dicarboxylic acid and esters thereof. Examples of the alicyclic dicarboxylic acid include cyclohexanedicarboxylic acid and esters thereof.
In the present disclosure, the dicarboxylic acid-derived component unit (a) preferably contains a component unit (a1) derived from terephthalic acid, naphthalene dicarboxylic acid, or cyclohexane dicarboxylic acid. These component units (a1) can increase the crystallinity of the polyamide, unlike isophthalic acid, for example. From the viewpoint of obtaining satisfactory crystallinity of the polyamide resin, the content of the component unit (a1) is set to be more than 20 mol% and 100 mol% or less based on the total number of moles of the dicarboxylic acid-derived component unit (a). From the viewpoint of further increasing the crystallinity of the polyamide resin, the content of the component unit (a1) is preferably 45 mol% or more, more preferably 50 mol% or more, even more preferably more than 80 mol%, and particularly preferably more than 90 mol%, based on the total number of moles of the dicarboxylic acid-derived component unit (a). The upper limit of the content of the component unit (a1) is not limited, but may be 100 mol%, or 99 mol% or less, based on the

total number of moles of the dicarboxylic acid-derived component unit (a). In particular, from the viewpoint of obtaining a polyamide resin with high crystallinity and high heat resistance, the component unit (a1) is more preferably a component unit derived from terephthalic acid.

The dicarboxylic acid-derived component unit (a) may contain a component unit (a2) derived from an aromatic dicarboxylic acid other than those of the component unit (a1), a component unit (a3) derived from an aliphatic dicarboxylic acid having 4 to 18 carbon atoms, or a component unit (a4) derived from a tribasic or higher polyhydric carboxylic acid, to the extent that the effects of the present disclosure is not impaired.

Examples of the component unit (a2) derived from an aromatic dicarboxylic acid other than terephthalic acid include component units each derived from isophthalic acid or 2-methylterephthalic acid, preferably a component unit derived from isophthalic acid. From the viewpoint of obtaining satisfactory crystallinity of the polyamide resin, the content of these component units (a2) is preferably 1 mol% or more and 50 mol% or less, more preferably 1 mol% or more and 20 mol% or less, even more preferably 1 mol% or more and 10 mol% or less, and particularly preferably 1 mol% or more and 5 mol% or less, based on the total number of moles of the dicarboxylic acid-derived component unit (a).

The component unit (a3) derived from an aliphatic dicarboxylic acid is a component unit derived from an aliphatic dicarboxylic acid having an alkylene group having 4 to 18 carbon atoms and is preferably a component unit derived from an aliphatic dicarboxylic acid having an alkylene group having 6 or more and 12 or less carbon atoms. Examples of the aliphatic dicarboxylic acid include malonic acid, dimethylmalonic acid, succinic acid, glutaric acid, adipic acid, 2-methyladipic acid, trimethyladipic acid, pimelic acid, 2,2-dimethylglutaric acid, 3,3-diethylsuccinic acid, azelaic acid, sebacic acid, and suberic acid. A component unit derived from adipic acid and a component unit derived from sebacic acid are preferred. From the viewpoint of obtaining satisfactory crystallinity of the polyamide resin, the content of these component units (a3) is preferably 0 mol% or more and 40 mol% or less, more preferably 0 mol% or more and 20 mol% or less, even more preferably 1 mol% or more and 10 mol% or less, and particularly preferably 1 mol% or more and 5 mol% or less, based on the total number of moles of the dicarboxylic acid-derived component unit (a).

Examples of the component unit (a4) derived from a tribasic or higher polyhydric carboxylic acid include component units each derived from trimellitic acid, pyromellitic acid, or an ester thereof. The content of such a component unit derived from a polyhydric carboxylic acid may be 0 mol% or more and 5 mol% or less based on the total number of moles of the dicarboxylic acid-derived component unit (a).

However, from the viewpoint of not impairing the crystallinity of the resin too much, the content of the component unit derived from isophthalic acid and the component unit derived from an aliphatic dicarboxylic acid having 4 to 18 carbon atoms other than adipic acid is preferably small. Specifically, the content is preferably 20 mol% or less, more preferably 10 mol% or less, based on the total number of moles of the dicarboxylic acid-derived component unit (a).

[Diamine-derived Component Unit (b)]

When the polyamide resin contains, as the diamine-derived component unit (b), a component unit (b2) derived from an alkylene diamine having a specific cyclic structure (diamine represented by Formula (1)) in addition to a component unit (b1) derived from an alkylene diamine having 4 to 18 carbon atoms, the glass transition temperature (Tg) of the polyamide resin can be satisfactorily increased.

That is, the component unit (b2) derived from a diamine represented by Formula (1) has a nonlinear structure and thus reduces the mobility of the molecular chain of the polyamide resin. Therefore, the component unit (b2) derived from a diamine represented by Formula (1) can increase the glass transition temperature (Tg) of a polyamide resin that includes this component unit (b2) as compared to a polyamide resin that does not include this component unit (b2). In addition, it is considered that the polyamide resin including this component unit (b2) thus has high mechanical strength even in a high temperature range and can maintain this high mechanical strength for a long period of time.

Further, the component unit (b2) derived from a diamine represented by Formula (1) can appropriately lower the melting point (Tm) of a polyamide resin that includes this component unit (b2) as compared to a polyamide resin that does not include this component unit (b2). The polyamide resin including this component unit (b2) thus has high fluidity during injection molding and high moldability.

The findings of the present inventors suggests that the decrease in fluidity of a polyamide resin composition, when glass fibers treated with a sizing agent or a surface treatment agent each having an acidic group are added, is caused by the acidic group of the sizing agent or surface treatment agent reacting with the amino terminal of the polyamide resin when the polyamide resin composition is melted. In other words, the above reaction causes the polyamide resin and the glass fibers to be bonded together via the sizing agent or surface treatment agent, thereby increasing the apparent molecular weight of the polyamide resin. It is considered that the increase in the apparent molecular weight reduces the fluidity of the polyamide resin composition. Regarding such a problem, the component unit (b2) derived from a diamine represented by Formula (1) bends the molecular chain of the polyamide resin to cause appropriate steric hindrance, thereby inhibiting the reaction between the acidic group of the sizing agent or surface treatment agent and the amino terminal of the polyamide resin. It is considered that an increase in the apparent molecular weight of the polyamide resin is

thus prevented, thereby preventing a decrease in fluidity of the polyamide resin composition when a sizing agent or surface treatment agent having an acidic group is used.

In addition, the component unit (b2) derived from a diamine represented by Formula (1) bends the molecular chain of the polyamide resin, thereby preventing moisture from entering the inside of the polyamide resin composition. The component unit (b2) derived from the diamine represented by Formula (1) thus causes the polyamide resin to be less likely to hydrolyze. It is considered that a decrease thus can be prevented in mechanical strength (particularly tensile strength) of a molded article of the polyamide resin composition, particularly in a high temperature and high humidity environment.

In addition, the polyamide resin has satisfactory crystallinity due to the component unit (b1) derived from an alkylene diamine having 4 to 18 carbon atoms, and thus the fluidity during injection molding and mechanical strength (of the polyamide resin itself) are high. Further, the polyamide resin has a high glass transition temperature (Tg), and therefore it is considered that the polyamide resin has high mechanical strength even in a high temperature range and can maintain this high mechanical strength.

The number of carbon atoms in the alkylene diamine having 4 to 18 carbon atoms, which is a material for the component unit (b1), is more preferably 4 or more and 10 or less, from the viewpoint of making it difficult to lower the Tg of the resin.

The alkylene diamine having 4 to 18 carbon atoms may contain a linear alkylene diamine or a branched alkylene diamine. From the viewpoint of increasing the crystallinity of the resin, the alkylene diamine having 4 to 18 carbon atoms preferably contains a linear alkylene diamine. That is, the component unit derived from an alkylene diamine having 4 to 18 carbon atoms preferably contains a component unit derived from a linear alkylene diamine.

Examples of the alkylene diamine having 4 to 18 carbon atoms include linear alkylene diamines such as 1,4-diaminobutane, 1,6-diaminohexane, 1,7-diaminoheptane, 1,8-diaminooctane, 1,9-diaminononane, and 1,10-diaminodecane, and branched alkylene diamines such as 2-methyl-1,5-pentanediamine and 2-methyl-1,8-octanediamine. In particular, 1,4-diaminobutane, 1,6-diaminohexane, 1,9-diaminononane, 1,10-diaminodecane, 2-methyl-1,5-pentanediamine, and 2-methyl-1,8-octanediamine are preferred, and 1,6-diaminohexane and 1,10-diaminodecane are more preferred. These alkylene diamines may be used alone or in combination.

The content of the component unit (b1) derived from an alkylene diamine having 4 to 18 carbon atoms is preferably more than 50 mol% and 90 mol% or less based on the total number of moles of the diamine-derived component unit (b). When the content is more than 50 mol%, the crystallinity of the polyamide resin can be satisfactorily increased, and the fluidity during injection molding and mechanical strength of the polyamide resin itself can be further improved. When the content is 90 mol% or less, the content of the component unit (b2) derived from a diamine represented by Formula (1) can be increased. Therefore, the glass transition temperature (Tg) of the polyamide resin is increased, the mechanical strength in a high temperature range is also increased, and the (Tm) of the polyamide resin is appropriately lowered to increase the moldability.

From the same viewpoint, the content of the component unit (b1) derived from an alkylene diamine having 4 to 18 carbon atoms is more preferably 55 mol% or more and 85 mol % or less, even more preferably 60 mol% or more and 80 mol% or less, based on the total number of moles of the diamine-derived component unit (b).

On the other hand, the content of the the component unit (b2) derived from a diamine represented by Formula (1) is preferably 10 mol% or more and less than 50 mol% based on the total number of moles of the diamine-derived component unit (b). When the content is 10 mol% or more, the glass transition temperature (Tg) of the polyamide resin is increased, the mechanical strength in a high temperature range is also increased, and the (Tm) of the polyamide resin is appropriately lowered to increase the moldability. When the content is less than 50 mol%, the content of the component unit (b1) derived from an alkylene diamine having 4 to 18 carbon atoms can be increased. Therefore, in addition to satisfactorily increasing the crystallinity of the polyamide resin to further increase the mechanical strength of the molded article, a decrease in the fluidity of the polyamide resin itself caused by the component unit (b2) derived from the diamine represented by Formula (1) can be prevented.

From the same viewpoint, the content of the component unit (b2) derived from the diamine represented by Formula (1) is more preferably 10 mol% or more and less than 45 mol%, even more preferably 20 mol% or more and 40 mol% or less, further preferably 20 mol% or more and 38 mol% or less, and particularly preferably 22 mol% or more and 36 mol% or less, based on the total number of moles of the diamine-derived component unit (b).

The diamine-derived component unit (b) may further contain a component unit (b3) derived from another diamine, to the extent that the effects of the present disclosure is not impaired. Examples of the other diamines include aromatic diamines and alicyclic diamines. The content of component units (b3) derived from another diamine may be 50 mol% or less based on the total number of moles of the diamine-derived component unit (b).

In the polyamide resin, at least some of the terminal groups of the molecules thereof may be blocked with a terminal blocking agent from the viewpoint of increasing thermal stability during compounding and molding, and further increasing mechanical strength. For example, when the terminals of the molecules are carboxy group, the terminal blocking agent is preferably a monoamine, and when the terminals of the molecules are amino group, the terminal blocking agent is preferably a monocarboxylic acid.

Examples of the monoamine include aliphatic monoamines such as methylamine, ethylamine, propylamine, and butylamine, alicyclic monoamines such as cyclohexylamine and dicyclohexylamine, and aromatic monoamines such as aniline and toluidine. Examples of the monocarboxylic acid include aliphatic monocarboxylic acids having 2 or more and 30 or less carbon atoms such as acetic acid, propionic acid, butyric acid, valeric acid, caproic acid, caprylic acid, lauric acid, tridecylic acid, myristic acid, palmitic acid, stearic acid, oleic acid, and linoleic acid, aromatic monocarboxylic acids such as benzoic acid, toluic acid, naphthalenecarboxylic acid, methylnaphthalenecarboxylic acid, and phenylacetic acid, and alicyclic monocarboxylic acids such as cyclohexanecarboxylic acid. The aromatic monocarboxylic acid and the alicyclic monocarboxylic acid may have a substituent in the cyclic structure thereof.

[Physical Properties]

The polyamide resin may have a melting point (Tm) measured by a differential scanning calorimeter (DSC) of 280°C or more and 330°C or less and a glass transition temperature (Tg) measured by the DSC of 135°C or more and 180°C or less.

A polyamide resin having a melting point (Tm) of 280°C or more is less likely to impair the mechanical strength, heat resistance, or the like of the polyamide resin composition or the molded article in a high temperature range. A polyamide resin having a melting point (Tm) of 330°C or less is more likely to increase the moldability of the polyamide resin composition since there is no need to increase the molding temperature excessively. From the above viewpoint, the melting point (Tm) of the polyamide resin is more preferably 290°C or more and 330°C or less, and even more preferably 300°C or more and 330°C or less.

A polyamide resin having a glass transition temperature (Tg) of 135°C or more is less likely to impair the heat resistance of the polyamide resin composition and the molded article, and at the same time, can increase the mechanical strength in a high temperature range. A polyamide resin having a glass transition temperature (Tg) of 180°C or less is more likely to increase the moldability of the polyamide resin composition. From the above viewpoint, the glass transition temperature (Tg) of the polyamide resin is more preferably 140°C or more and 170°C or less.

The heat of fusion ($\Delta H$) of the polyamide resin is preferably 10 mJ/mg or more. A polyamide resin having a heat of fusion ($\Delta H$) of 10 mJ/mg or more is crystalline, and thus more likely to increase the fluidity during injection molding and the mechanical strength. From the same viewpoint, the heat of fusion ($\Delta H$) of the polyamide resin is more preferably 15 mJ/mg or more, and even more preferably 20 mJ/mg or more. The upper limit of the heat of fusion ($\Delta H$) of the polyamide resin is not limited, but may be 90 mJ/mg from the viewpoint of not impairing moldability.

The heat of fusion ($\Delta H$), melting point (Tm), and glass transition temperature (Tg) of the polyamide resin can be measured with a differential scanning calorimeter (DSC220C, manufactured by Seiko Instruments Inc.).

Specifically, approximately 5 mg of a polyamide resin is sealed in an aluminum pan for measurement and heated from room temperature to 350°C at the rate of 10°C/min. For completely melting the resin, the resin is held at 350°C for 3 minutes and then cooled to 30°C at the rate of 10°C/min. After allowed to stand at 30°C for 5 minutes, the resin is heated a second time to 350°C at the rate of 10°C/min. The endothermic peak temperature (°C) in this second heating is used as the melting point (Tm) of the polyamide resin, and the displacement point corresponding to the glass transition is used as the glass transition temperature (Tg). The heat of fusion ($\Delta H$) is determined from the area of the endothermic peak during the second heating according to JIS K7122.

The melting point (Tm), glass transition temperature (Tg), and heat of fusion ($\Delta H$) of a polyamide resin can be adjusted by the structure of the dicarboxylic acid-derived component unit (a), the content of the component unit (b2) derived from a diamine represented by Formula (1), the content ratio of the component unit (b 1) derived from an alkylene diamine having 4 to 18 carbon atoms to the component unit (b2) derived from the diamine represented by Formula (1), and/or the number of carbon atoms of the alkylene diamine having 4 to 18 carbon atoms.

For increasing the heat of fusion ($\Delta H$) of the polyamide resin, it is preferred to lower the content of the component unit (b2) and the content ratio of the component unit (b2) (namely, the ratio of the component unit (b2) to the total number of moles of the diamine-derived component unit (b)). On the other hand, for increasing the glass transition temperature (Tg) of the polyamide resin and lowering the melting point (Tm) of the polyamide resin, it is preferred, for example, to increase the content of the component unit (b2) and the content ratio of the component unit (b2) (namely, the ratio of the component unit (b2) to the total number of moles of the diamine-derived component unit (b)).

The intrinsic viscosity [$\eta$] of the polyamide resin measured in 96.5% sulfuric acid at a temperature of 25°C is preferably 0.6 dl/g or more and 1.5 dl/g or less. A polyamide resin having intrinsic viscosity [$\eta$] of 0.6 dl/g or more is more likely to satisfactorily increase the mechanical strength (for example, toughness) of the molded article. A polyamide resin having intrinsic viscosity [$\eta$] of 1.5 dl/g or less is less likely to impair the fluidity of the polyamide resin composition during molding. From the same viewpoint, the intrinsic viscosity [$\eta$] of the polyamide resin is more preferably 0.8 dl/g or more and 1.2 dl/g or less. The intrinsic viscosity [$\eta$] can be adjusted, for example, by the amount of terminal blocking of the polyamide resin.

The intrinsic viscosity of the polyamide resin can be measured according to JIS K6810-1977.

Specifically, 0.5 g of a polyamide resin is dissolved in 50 ml of 96.5% sulfuric acid solution to prepare a sample solution. The intrinsic viscosity can be obtained by measuring the falling time (seconds) of the sample solution with an Ubbelohde viscometer at 25 $\pm$ 0.05°C, and applying the obtained value to the following equation for calculation.

$$[\eta] = \eta SP / [C(1 + 0.205\eta SP)]$$

In the above equation, symbols and variables are defined as follows.

[$\eta$]: Intrinsic viscosity (dl/g)
$\eta$SP: Specific viscosity
C: Sample concentration (g/dl)

The $\eta$SP is obtained by the following equation.

$$\eta SP = (t - t0) / t0$$

t: Falling time of sample solution (seconds)
t0: Falling time of blank sulfuric acid (seconds)

The amount of terminal amino groups of the polyamide resin is preferably 10 mmol/kg or more and 150 mmol/kg or less, more preferably 15 mmol/kg or more and 130 mmol/kg or less, and even more preferably 20 mmol/kg or more and 100 mmol/kg or less. A polyamide resin having an amount of terminal amino groups of 150 mmol/kg or more is more likely to cause the decrease in fluidity when glass fibers treated with a surface treatment agent or sizing agent each having an acidic group are added. In such a case, the effect of preventing a decrease in fluidity by using a polyamide resin is remarkable. A polyamide resin having an amount of terminal amino groups of 150 mmol/kg or less can achieve satisfactory fluidity of the polyamide resin composition.

The amount of terminal amino groups is a value measured by the following method. A sample solution is prepared by dissolving 1 g of a polyamide resin in 35 mL of phenol and mixing the resultant with 2 mL of methanol. The amount of terminal amino groups ([$NH_2$], unit: mmol/kg) is then determined with thymol blue as an indicator by titration of the sample solution using a 0.01 N HCl aqueous solution.

[Production Method]

The polyamide resin can be produced, for example, by polycondensation of the above-described dicarboxylic acid and diamine in a uniformly dissolved solution. Specifically, as described in WO03/085029, a low-order condensate is obtained by heating a dicarboxylic acid and a diamine in the presence of a catalyst, and then a shear stress is applied to the melt of this low-order condensate for subjecting the melt to polycondensation, thereby producing the polyamide resin.

From the viewpoint of adjusting the intrinsic viscosity of the polyamide resin, the above-described terminal blocking agent may be added to the reaction system. The intrinsic viscosity [$\eta$] (or molecular weight) of the polyamide resin can be adjusted by adjusting the amount of the terminal blocking agent to be added.

The terminal blocking agent is added to the reaction system of the dicarboxylic acid and the diamine. The amount of the terminal blocking agent to be added is preferably 0.07 mol or less, more preferably 0.05 mol or less, based on 1 mol of the total dicarboxylic acid.

1-2. Glass Fiber

The polyamide resin composition contains glass fibers.

Any type of glass fiber may be used as long as it is used for reinforcing a resin, and chopped strands or milled fibers with a shorter fiber length may be used. In addition, the cross-sectional shape of the glass fiber may be circular or non-circular such as an ellipse or an oval.

The average fiber length of the glass fibers may be, for example, 1 $\mu$m or more and 20 mm or less, preferably 5 $\mu$m or more and 10 mm or less, from the viewpoint of increasing the moldability of the polyamide resin composition and increasing the mechanical strength and heat resistance of the resulting molded article. In addition, the aspect ratio of the glass fiber may be, for example, 5 or more and 2,000 or less, preferably 30 or more and 600 or less.

The average fiber length and average fiber diameter of the glass fibers can be measured by the following method.

1) After a polyamide resin composition is dissolved in a hexafluoroisopropanol/chloroform solution (0.1/0.9 vol%), the

resulting liquid is filtered and the obtained residue is collected.

2) The residue obtained in the above-described step 1) is dispersed in water, and the fiber length (Li) and the fiber diameter (di) of each of randomly selected 300 fibers are measured with an optical microscope (magnification: 50x). Then, qi is defined as the number of fibers whose fiber length is Li, and the weight average length (Lw) is calculated based on the following equation and used as the average fiber length of the glass fibers.

$$\text{Weight average length (Lw)} = (\Sigma qi \times Li^2) / (\Sigma qi \times Li)$$

In the similar manner, ri is defined as the number of fibers whose fiber diameter is Di, and the weight average diameter (Dw) is calculated based on the following equation and used as the average fiber diameter of the glass fibers.

$$\text{Weight average diameter (Dw)} = (\Sigma ri \times Di^2) / (\Sigma ri \times Di)$$

The content of the glass fibers is not limited, but may be, for example, 15 mass% or more and 70 mass% or less based on the total mass of the polyamide resin composition. The content is preferably 15 mass% or more and 50 mass% or less, more preferably 20 mass% or more and 50 mass% or less.

The glass fibers contains a surface treatment agent or a sizing agent.

The surface treatment agent or sizing agent may be any known surface treatment agent or sizing agent used for glass fibers to be added to a polyamide resin composition, provided the surface treatment agent or sizing agent has an acidic group. Examples of the acidic group include carboxy group, acid anhydride group, carboxylic ester group, and sulfonic acid group. Among these, carboxy group, acid anhydride group, and carboxylic ester group are preferred, and carboxy group and acid anhydride group are more preferred. The carboxylic ester group may be a functional group derived from a carboxylic ester.

Examples of the surface treatment agent having an acidic group include silane coupling agents containing an acid anhydride group such as 3-trimethoxysilylpropylsuccinic anhydride.

Examples of the sizing agent having an acidic group include sizing agents containing a homopolymer or copolymer of an unsaturated carboxylic acid and sizing agents containing a copolymer of an unsaturated carboxylic acid or an anhydride thereof and an unsaturated monomer.

Examples of the unsaturated carboxylic acid include acrylic acid, methacrylic acid, cinnamic acid, itaconic acid, fumaric acid, mesaconic acid, citraconic acid, and maleic acid. Examples of the unsaturated carboxylic anhydride include maleic anhydride, itaconic anhydride, and dodecenylsuccinic anhydride. Among these, acrylic acid, methacrylic acid, maleic acid, and maleic anhydride are preferred.

Examples of the unsaturated monomer include styrene, butadiene, acrylonitrile, vinyl acetate, methyl acrylate, ethyl acrylate, methyl methacrylate, ethyl methacrylate, methyl styrene, ethylene, propylene, butylene, isobutylene, and vinyl ether. Among these, methyl acrylate and methyl methacrylate are preferred, and it is more preferable that both methyl acrylate and methyl methacrylate are contained.

When the sizing agent contains a copolymer of an unsaturated carboxylic acid or an anhydride thereof and an unsaturated monomer, the proportion of the unsaturated carboxylic acid or the anhydride thereof based on the total mass of the copolymer is preferably 20 mass% or more and 60 mass% or less. A proportion of 20 mass% or more remarkably improves the mechanical strength of the polyamide resin composition by enhancing the chemical interaction with the polyamide resin through the acidic group (carboxy group). A proportion of 60 mass% or less remarkably improves the mechanical strength of the polyamide resin composition by increasing the molecular weight (chain length) of the copolymer to enhance the physical interaction with the polyamide resin.

The weight average molecular weight (Mw) of the homopolymer or copolymer is preferably 3,000 or more and 60,000 or less. A homopolymer or copolymer having a weight average molecular weight of 3000 or more further improves the mechanical strength of the polyamide resin composition by increasing the physical interaction with the polyamide resin. On the other hand, a copolymer having a weight average molecular weight of 60,000 or less can further improve the dispersibility of glass fibers in the polyamide resin. From the above viewpoint, the weight average molecular weight of the homopolymer or copolymer is preferably 10,000 or more and 50,000 or less, more preferably 20,000 or more and 50,000 or less. The weight average molecular weight of the copolymer is a value measured by gel permeation chromatography (GPC) and calculated with polystyrene as a standard substance.

The homopolymer or copolymer may be used in combination with another resin such as a urethane resin or an epoxy resin.

Examples of the urethane resin include urethane resins synthesized from an isocyanate such as m-xylylene diisocyanate (XDI), 4,4'-methylenebis(cyclohexyl isocyanate) (HMDI), or isophorone diisocyanate (IPDI), and a polyester-based or polyether-based diol.

(Production Method)

The glass fibers containing the surface treatment agent or the sizing agent can be obtained, for example, by applying (imparting) the surface treatment agent or the sizing agent to fiber strands by a known method such as a roller-type applicator during a step of producing the glass fibers, drying the fiber strands, and subjecting the fiber strands to a reaction.

The adhesion amount of the surface treatment agent or the sizing agent in terms of solid content is preferably 0.2 parts by mass or more and 3 parts by mass or less, more preferably 0.2 parts by mass or more and 2 parts by mass or less, and even more preferably 0.3 parts by mass or more and 2 parts by mass or less, based on 100 parts by mass of the glass fibers. When the adhesion amount is 0.2 parts by mass or more, the convergence of the glass fibers further improves. In addition, when the adhesion amount is 2 parts by mass or less, the thermal stability of the polyamide resin composition further improves.

1-3. Additional Component

The polyamide resin composition may further contain one or more additional components. The content of the additional components is preferably 0 mass% or more and 10 mass% or less, more preferably 0.5 mass% or more and 10 mass% or less, based on the total mass of the polyamide resin composition.

Examples of the additional components include reinforcing materials other than glass fibers, crystal nucleating agents, lubricants, flame retardants, corrosion resistance improvers, drip preventing agents, ion scavengers, elastomers (rubber), antistatic agents, mold release agents, antioxidants (such as phenols, amines, sulfur, and phosphorous), heat stabilizers (such as lactone compounds, vitamin E, hydroquinones, copper halides, and iodine compounds), light stabilizers (such as benzotriazoles, triazines, benzophenones, benzoates, hindered amines, and oxanilides), and other polymers (such as polyolefins, olefin copolymers such as ethylene/propylene copolymer, ethylene/1-butene copolymer, and propylene/1-butene copolymer, polystyrene, polyamide, polycarbonate, polyacetal, polysulfone, polyphenylene oxide, fluororesin, silicone resin, and LCP). In particular, the polyamide resin composition of the present disclosure preferably further contains a reinforcing material, from the viewpoint of increasing the mechanical strength of the molded article.

Examples of the reinforcing materials other than glass fibers include fibrous reinforcing materials such as wollastonite, potassium titanate whiskers, calcium carbonate whiskers, aluminum borate whiskers, magnesium sulfate whiskers, zinc oxide whiskers, milled fibers, and cut fibers, and granular reinforcing materials.

A crystal nucleating agent can increase the crystallinity of a molded article. Examples of the crystal nucleating agent include metal salt-based compounds such as sodium 2,2-methylenebis(4,6-di-t-butylphenyl)phosphate, aluminum tris(p-t-butylbenzoate), and stearates, sorbitol-based compounds such as bis(p-methylbenzylidene)sorbitol and bis(4-ethylbenzylidene)sorbitol, and inorganic substances such as talc, calcium carbonate, and hydrotalcite. Among these, talc is preferred from the viewpoint of further increasing the crystallinity of a molded article. These crystal nucleating agents may be used alone or in combination.

The content of the crystal nucleating agent is preferably 0.1 parts by mass or more and 5 parts by mass or less, more preferably 0.1 parts by mass or more and 3 parts by mass or less, based on the total mass of the polyamide resin composition. A crystal nucleating agent having the content within the above range is more likely satisfactorily increase the crystallinity of a molded article, thereby obtaining satisfactory mechanical strength.

A lubricant increases the flowability of the polyamide resin composition during injection molding and improves the appearance of the resulting molded article. The lubricant may be a fatty acid metal salt such as an oxycarboxylic acid metal salt or a higher fatty acid metal salt.

The oxycarboxylic acid in the oxycarboxylic acid metal salt may be an aliphatic oxycarboxylic acid or an aromatic oxycarboxylic acid. Examples of the aliphatic oxycarboxylic acid include aliphatic oxycarboxylic acids having 10 or more and 30 or less carbon atoms, such as α-hydroxymyristic acid, α-hydroxypalmitic acid, α-hydroxystearic acid, α-hydroxyeicosanoic acid, α-hydroxydocosanoic acid, α-hydroxytetraeicosanoic acid, α-hydroxyhexaeicosanoic acid, α-hydroxyoctaeicosanoic acid, α-hydroxytriacontanoic acid, β-hydroxymyristic acid, 10-hydroxydecanoic acid, 15-hydroxypentadecanoic acid, 16-hydroxyhexadecanoic acid, 12-hydroxystearic acid, and ricinoleic acid. Examples of the aromatic oxycarboxylic acid include salicylic acid, m-oxybenzoic acid, p-oxybenzoic acid, gallic acid, mandelic acid, and tropic acid.

Examples of the metal in the oxycarboxylic acid metal salt include alkali metals such as lithium, and alkaline earth metals such as magnesium, calcium, and barium.

Among these, the oxycarboxylic acid metal salt is preferably a metal salt of 12-hydroxystearic acid, and more preferably magnesium 12-hydroxystearate and calcium 12-hydroxy stearate.

Examples of the higher fatty acid in the higher fatty acid metal salt include higher fatty acids having 15 or more and 30 or less carbon atoms such as stearic acid, oleic acid, behenic acid, behenic acid, and montanic acid.

Examples of the metal in the higher fatty acid metal salt include calcium, magnesium, barium, lithium, aluminum,

zinc, sodium, and potassium.

Among these, the higher fatty acid metal salt is preferably calcium stearate, magnesium stearate, barium stearate, calcium behenate, sodium montanate, or calcium montanate.

The content of the lubricant is preferably 0.01 mass% or more and 1.3 mass% or less based on the total mass of the polyamide resin composition. A lubricant having the content of 0.01 mass% or more is more likely to increase the fluidity during molding and more likely to improve the appearance of an obtained molded article. A lubricant having the content of 1.3 mass% or less is less likely to generate gas from the decomposition thereof during molding and more likely to improve the appearance of the product.

1-4. Production Method

The polyamide resin composition can be produced by mixing the above-described polyamide resin and, as necessary, additional component(s) by a known resin kneading method such as a method using a Henschel mixer, V blender, ribbon blender, or tumbler blender. Alternatively, the polyamide resin composition can be produced, after the mixing, by melt-kneading the mixture in a single-screw extruder, multi-screw extruder, kneader, or Banbury mixer, and then granulating or pulverizing the resulting melt kneaded product.

2. Applications of Polyamide Resin Composition

The polyamide resin composition of the present disclosure is molded by a known molding method such as compression molding, injection molding, or extrusion molding, to be used as various polyamide molded articles.

A molded article of the polyamide resin composition of the present disclosure can be used for various applications. Examples of such applications include the following: automotive exterior parts such as radiator grilles, rear spoilers, wheel covers, wheel caps, cowl vent grilles, air outlet louvers, air scoops, hood bulges, sunroofs, sunroof rails, fenders, and back doors; parts in automotive engine rooms such as cylinder-head covers, engine mounts, air intake manifolds, throttle bodies, air intake pipes, radiator tanks, radiator supports, water pumps, water pump inlets, water pump outlets, thermostat housings, cooling fans, fan shrouds, oil pans, oil filter housings, oil filler caps, oil level gauges, oil pumps, timing belts, timing belt covers, and engine covers; automotive fuel system parts such as fuel caps, fuel filler tubes, automotive fuel tanks, fuel sender modules, fuel cutoff valves, quick connectors, canisters, fuel delivery pipes, and fuel filler necks; automotive drive line parts such as shift lever housings and propeller shafts; automotive chassis parts such as stabilizer bars, linkage rods, and engine mount brackets; automotive functional parts such as window regulators, door locks, door handles, outside door mirror stays, wipers and parts thereof, accelerator pedals, pedal modules, joints, resin screws, nuts, bushes, seal rings, bearings, bearing retainers, gears, and actuators; automotive electronics parts such as wire harness connectors, relay blocks, sensor housings, fuse parts, encapsulations, ignition coils, and distributor caps; fuel system parts for general purpose apparatuses such as fuel tanks for general purpose apparatuses (for example, brush cutters, lawn mowers, and chain saws); electrical and electronic parts such as connectors and LED reflectors; building material parts; industrial equipment parts; small housings (including housings for personal computers and mobile phones); various housings such as exterior molded products; and exterior parts.

In particular, the polyamide resin composition of the present disclosure is suitable for use in an in-vehicle member under a high temperature and high humidity environment, particularly a tube or the like through which an antifreeze flows by virtue of a small decrease in mechanical strength even under a high temperature and high humidity environment. In addition, the polyamide resin composition of the present disclosure can be suitably used for automotive electronics parts, electrical and electronic parts, industrial equipment parts, and parts of electrical devices such as housings of electrical devices or exterior parts.

Examples

Hereinafter, the present disclosure is described with reference to Examples. However, the Examples should not be construed as limiting the scope of the present disclosure.

In the following experiments, for a polyamide resin, the melting point (Tm), the glass transition temperature (Tg), the intrinsic viscosity, the heat of fusion, and the amount of terminal amino groups were measured by the following methods.

(Melting Point (Tm), Glass Transition Temperature (Tg), Heat of Fusion (ΔH))

For a polyamide resin, the heat of fusion (ΔH), melting point (Tm), and glass transition temperature (Tg) were measured with a differential scanning calorimeter (DSC220C, manufactured by Seiko Instruments Inc.).

Specifically, approximately 5 mg of a polyamide resin was sealed in an aluminum pan for measurement and

heated from room temperature to 350°C at the rate of 10°C/min. For completely melting the resin, the resin was held at 350°C for 3 minutes and then cooled to 30°C at the rate of 10°C/min. After allowed to stand at 30°C for 5 minutes, the resin was heated a second time to 350°C at the rate of 10°C/min. The endothermic peak temperature (°C) in this second heating was used as the melting point (Tm) of the polyamide resin, and the displacement point corresponding to the glass transition was used as the glass transition temperature (Tg). The heat of fusion (ΔH) was determined from the area of the endothermic peak during the second heating according to JIS K7122.

(Intrinsic Viscosity [η])

The intrinsic viscosity [η] of a polyamide resin was obtained as follows: 0.5 g of the polyamide resin was dissolved in 50 ml of 96.5% sulfuric acid solution to prepare a sample solution, the falling time (seconds) of the sample solution was measured with an Ubbelohde viscometer at 25 ± 0.05°C, and the intrinsic viscosity was calculated based on the equation "[η] = ηSP / (C(1 + 0.205ηSP))."

[η]: Intrinsic viscosity (dl/g)
ηSP: Specific viscosity
C: Sample concentration (g/dl)
t: Falling time of sample solution (seconds)
t0: Falling time of blank sulfuric acid (seconds)

$$\eta SP = (t - t0) / t0$$

(Amount of Terminal Amino Groups)

A sample solution was prepared by dissolving 1 g of a polyamide resin in 35 mL of phenol and mixing the resultant with 2 mL of methanol. The amount of terminal amino groups ($[NH_2]$, unit: mmol/kg) was then determined with thymol blue as an indicator by titration of the sample solution using a 0.01 N HCl aqueous solution.

1. Synthesis/preparation of Materials

1-1. Synthesis of Polyamide Resin

(Synthesis Example 1)

An autoclave having an internal capacity of 1 L was charged with 259.5 g (1561.7 mmol) of terephthalic acid, 118.9 g (1023.1 mmol) of 1,6-diaminohexane, 85.0 g (551.1 mmol) of norbornanediamine, 0.37 g of sodium hypophosphite monohydrate, and 81.8 g of distilled water, and purged with nitrogen. Stirring was started from 190°C, and the internal temperature of the autoclave was raised to 250°C over 3 hours. At this time, the internal pressure of the autoclave was increased to 3.0 MPa. After the reaction was continued for 1 hour, the autoclave was vented to the atmosphere through a spray nozzle installed at the bottom thereof, and a low-order condensate was extracted. Subsequently, the low-order condensate was cooled to room temperature, and then was pulverized with a pulverizer until the condensate has a particle size of 1.5 mm or less and dried at 110°C for 24 hours.

Next, this low-order condensate was placed in a solid-state polymerization apparatus having shelves, and after purging with nitrogen, the temperature was raised to 215°C over about 1 hour and 30 minutes. After the reaction was carried out for 1 hour and 30 minutes, the temperature was lowered to room temperature.

The obtained prepolymer was then melt-polymerized in a twin-screw extruder with a screw diameter of 30 mm and LID of 36 under the conditions of a barrel setting temperature of 330°C, a screw rotation speed of 200 rpm, and a resin feed rate of 6 kg/h, thereby obtaining polyamide resin 1.

Obtained polyamide resin 1 had an intrinsic viscosity [η] of 0.97 dl/g, a melting point (Tm) of 312°C, a glass transition temperature (Tg) of 167°C, a heat of fusion (ΔH) of 44 mJ/mg, and an amount of terminal amino groups of 30 mmol/kg.

(Synthesis Example 2)

Polyamide resin 2 was prepared in the same manner as in Synthesis Example 1, except that the amount of 1,6-diaminohexane put into the autoclave was changed to 280 g (2410 mmol), the amount of terephthalic acid was changed to 277.4 g (1670 mmol), the amount of isophthalic acid was set to 119.6 g (720 mmol), 3.66 g (30 mmol) of benzoic acid was

added, the amount of sodium hypophosphite monohydrate was changed to 5.7 g, and the amount of distilled water was changed to 545 g.

Obtained polyamide resin 2 had an intrinsic viscosity [η] of 1.0 dl/g, a melting point (Tm) of 330°C, a glass transition temperature (Tg) of 125°C, a heat of fusion (ΔH) of 50 mJ/mg, and an amount of terminal amino groups of 25 mmol/kg.

1-2. Glass Fiber

- Glass fiber surface modified by acid modification (FT-2A, average fiber diameter: 10.5 μm, average fiber length: 3 mm, sizing agent: polymer of unsaturated vinyl monomer containing carboxylic acid anhydride, manufactured by Owens Corning)
- Glass fiber surface modified with epoxy resin (ECS03T-747H, average fiber diameter: 10.5 μm, average fiber length: 3 mm, sizing agent: epoxy resin, manufactured by Nippon Electric Glass Co., Ltd.)
- Glass fiber surface modified with urethane resin (ECS03T-222H, average fiber diameter: 10.5 μm, average fiber length: 3 mm, sizing agent: urethane resin, manufactured by Nippon Electric Glass Co., Ltd.)

1-3. Lubricant

Sodium montanate (LICOMONT NAV101, manufactured by Clariant ("LICOMONT" is a registered trademark of the company))

1-4. Crystal Nucleating Agent

- Talc (fine particle talc)

2. Preparation of Polyamide Resin Composition

The above materials were mixed in a tumbler blender at the composition ratio (unit: parts by mass) as indicated in Table 1, and melt-kneaded with a 30 mmϕ vented twin screw extruder at a cylinder temperature of 300 to 335°C. The resulting kneaded product was extruded into strands and cooled in a water bath. The strands were then collected by a pelletizer and cut to obtain a polyamide resin composition in the form of pellets.

3. Evaluation

The resulting polyamide resin compositions were evaluated based on the following criteria.

3-1. Flow Length

Each polyamide resin composition was injected under the conditions below by using a bar flow mold with a width of 10 mm and a thickness of 0.5 mm, and the flow length (mm) of the polyamide resin composition in the mold was measured. A longer flow length indicates better injection fluidity.

Molding machine: EC75N-2A, manufactured by Shibaura Machine Co., Ltd.
Injection setting pressure: 2,000 kg/cm$^2$
Molding machine cylinder temperature: 335°C
Mold temperature: 160°C

3-2. Retention Ratio of Flow Length before and after Adding Glass Fiber

The retention ratio of the flow length before and after adding the glass fibers was calculated by comparing the above-described flow lengths of polyamide resin compositions including the same amounts of additives except that no glass fiber was added to one of the polyamide resin compositions.

3-3. Tensile Strength (Initial)

Each polyamide resin composition was injection molded under the following conditions to prepare an ASTM-1

(dumbbell specimen) test piece having a thickness of 3.2 mm.

Molding machine: SE50DU, manufactured by Sumitomo Heavy Industries, Ltd.
Molding machine cylinder temperature: melting point of polyamide resin + 10°C
Mold temperature: glass transition temperature of polyamide resin + 20°C

The prepared test piece was left at a temperature of 23°C and in a nitrogen atmosphere for 24 hours according to ASTM D638. The test piece was then subjected to a tensile test according to ASTM D638 at a temperature of 23°C and a relative humidity of 50% to measure the tensile strength.

3-4. Tensile Strength (After High Temperature/High Humidity Treatment)

The above test piece was left for 500 hours under the conditions of a temperature of 121°C, 2 atmospheres, and 100% RH. The test piece was then allowed to be cooled to 23°C, and subjected to a tensile test according to ASTM D638 at a temperature of 23°C and a relative humidity of 50% to measure the tensile strength.

3-5. Retention Ratio of Tensile Strength

The ratio (retention ratio) of the tensile strength after the high temperature/high humidity treatment to the initial tensile strength was calculated by comparing the initial tensile strength with the tensile strength after the high temperature/high humidity treatment.

Tables 1 indicates the composition, flow length, retention ratio of flow length, tensile strength (initial), tensile strength (after high temperature/high humidity treatment), and retention ratio of tensile strength, for each prepared polyamide resin composition.

Table 1

| | | | Unit | Example | Comparative Example | Reference Example | Reference Example | Reference Example | Reference Example | Reference Example | Reference Example |
|---|---|---|---|---|---|---|---|---|---|---|---|
| Experiment No. | | | | 1 | 2 | 3 | 4 | 5 | 6 | 7 | 8 |
| Formulation | Polyamide resin | Polyamide resin 1 (6T/NBDAT=65/35) | Parts by mass | 64.05 | | 99.05 | | 64.05 | 64.05 | | |
| | | Polyamide resin 2 (6T/6I=70/30) | | | 64.05 | | 99.05 | | | 64.05 | 64.05 |
| | Lubricant | Sodium montanate | | 0.25 | 0.25 | 0.25 | 0.25 | 0.25 | 0.25 | 0.25 | 0.25 |
| | Crystal Nucleating Agent | Talc | | 0.7 | 0.7 | 0.7 | 0.7 | 0.7 | 0.7 | 0.7 | 0.7 |
| | Reinforcing material | Glass fiber surface modified by acid modification | | 35 | 35 | | | | | | |
| | | Glass fiber surface modified with epoxy resin | | | | | | 35 | | 35 | |
| | | Glass fiber surface modified with urethane resin | | | | | | | 35 | | 35 |
| Physical properties | Fluidity | | mm | 23 | 19 | 63 | 65 | 19 | 15 | 16 | 12 |
| | Retention ratio of flow length | | % | 37 | 29 | - | - | 30 | 24 | 24 | 19 |
| | Tensile strength (initial) | | MPa | 188 | 230 | - | - | 181 | 181 | - | - |
| | Tensile strength (after high temperature/high humidity treatment) | | MPa | 128 | 110 | - | - | 120 | 72 | - | - |
| | Retention ratio of tensile strength | | % | 68 | 48 | - | - | 66 | 40 | - | - |

As is clear from Table 1, the polyamide resin including the component unit (b2) derived from a diamine represented by Formula (1) can prevent a decrease in fluidity that would be caused by addition of glass fibers containing a surface treatment agent or sizing agent having an acidic group (comparison between Example 1 and Comparative Example 2). In addition, the polyamide resin including the component unit (b2) derived from the diamine represented by Formula (1) can prevent a decrease in mechanical strength in a high temperature and high humidity environment.
A resin composition was also prepared in a similar manner as in Example 1 except that PA6T (diamine therein is 100 mol% HDMA) was used as the polyamide resin; however, the resin composition could not be evaluated because the resin composition did not melt under the above conditions and could not be injection molded.
In addition, it has been newly confirmed that fluidity also decreases when another type of modified glass fibers was added in place of the acid-modified glass fibers. In these cases, however, even using the above polyamide resin in combination could not satisfactorily prevent the decrease in fluidity nor the decrease in mechanical strength after the high temperature/high humidity treatment (comparison between Example 1 and Reference Examples 5 to 8). These results indicate that combining the polyamide resin including the component unit (b2) derived from a diamine represented by Formula (1) with acid-modified glass fiber can achieve both high fluidity and high mechanical strength after the high temperature/high humidity treatment.
This application is entitled to and claims the benefit of Japanese Patent Application No. 2022-003322 filed on January 12, 2022, the disclosure of which is incorporated herein by reference in its entirety.

Industrial Applicability

The polyamide resin compositions of the present disclosure can achieve both improvement of mechanical strength by adding glass fibers treated with a sizing agent or surface treatment agent having an acidic group and prevention of the decrease in fluidity. Therefore, the present disclosure is expected to expand the applicability of polyamide resins to various applications and contribute to further popularization of polyamide resins.

## Claims

**1.** A polyamide resin composition, comprising:

a polyamide resin at a content of 20 mass% or more and 85 mass% or less based on a total mass of the polyamide resin composition; and
a glass fiber at a content of 15 mass% or more and 70 mass% or less based on the total mass of the polyamide resin composition, the glass fiber containing a surface treatment agent or a sizing agent,
wherein
the surface treatment agent or the sizing agent has an acidic group,
the polyamide resin contains
a dicarboxylic acid-derived component unit (a) and a diamine-derived component unit (b),
the dicarboxylic acid-derived component unit (a) contains
a component unit derived from an aromatic dicarboxylic acid or an alicyclic dicarboxylic acid, and
the diamine-derived component unit (b) contains

a component unit (b 1) derived from an alkylene diamine having 4 to 18 carbon atoms at a content of more than 50 mol% and 90 mol% or less based on a total number of moles of the diamine-derived component unit (b), and
a component unit (b2) derived from a diamine represented by Formula (1) below at a content of 10 mol% or more and less than 50 mol% based on the total number of moles of the diamine-derived component unit (b):

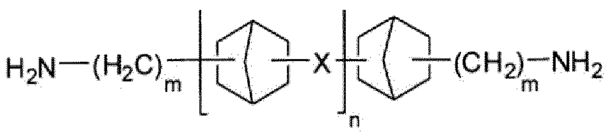

... Formula (1)

wherein, m and n are each independently 0 or 1, and -X- is a single bond or a divalent group selected from the group consisting of -O-, -S-, $-SO_2-$, -CO- and $-CH_2-$.

**2.** The polyamide resin composition according to claim 1, wherein

the acidic group of the surface treatment agent or the sizing agent is a carboxy group, an acid anhydride group, or a carboxylic ester group.

**3.** The polyamide resin composition according to claim 1, wherein the polyamide resin contains the component unit (b2) derived from the diamine represented by the Formula (1) at a content of 10 mol% or more and less than 45 mol% based on the total number of moles of the diamine-derived component unit (b).

**4.** The polyamide resin composition according to claim 1, wherein the component unit (b1) derived from the alkylene diamine having 4 to 18 carbon atoms contains a component unit derived from a linear alkylene diamine or a branched alkylene diamine.

**5.** The polyamide resin composition according to claim 4, wherein the linear alkylene diamine or the branched alkylene diamine is a diamine selected from the group consisting of 1,4-diaminobutane, 1,6-diaminohexane, 1,9-diaminononane, 1,10-diaminodecane, 2-methyl-1,5-pentanediamine, and 2-methyl-1,8-octanediamine.

**6.** The polyamide resin composition according to claim 1, wherein the aromatic dicarboxylic acid or the alicyclic dicarboxylic acid is terephthalic acid, naphthalene dicarboxylic acid, or cyclohexane dicarboxylic acid.

**7.** The polyamide resin composition according to claim 1, wherein the polyamide resin has a melting point (Tm) of 280°C or more.

**8.** The polyamide resin composition according to claim 1, wherein the polyamide resin is a crystalline polyamide resin.

**9.** The polyamide resin composition according to claim 1, wherein the polyamide resin has a heat of fusion ($\Delta H$) of 10 mJ/mg or more.

**10.** The polyamide resin composition according to any one of claims 1 to 9, wherein the polyamide resin composition is a resin composition for an in-vehicle member.

**11.** A polyamide molded article, comprising: the polyamide resin composition according to any one of claims 1 to 9.

**12.** The polyamide molded article according to claim 11, wherein the polyamide molded article is an in-vehicle member.

## INTERNATIONAL SEARCH REPORT

International application No.
**PCT/JP2023/000145**

**A. CLASSIFICATION OF SUBJECT MATTER**

***C08L 77/06***(2006.01)i; ***C08G 69/26***(2006.01)i; ***C08K 7/14***(2006.01)i
FI: C08L77/06; C08K7/14; C08G69/26

According to International Patent Classification (IPC) or to both national classification and IPC

**B. FIELDS SEARCHED**

Minimum documentation searched (classification system followed by classification symbols)

C08L77/06; C08G69/26; C08K7/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 63-154739 A (TORAY IND., INC.) 28 June 1988 (1988-06-28) claims, examples | 1-12 |
| A | JP 53-125497 A (BAYER AG) 01 November 1978 (1978-11-01) claims, examples | 1-12 |
| A | JP 04-366168 A (MITSUI PETROCHEM. IND., LTD.) 18 December 1992 (1992-12-18) claims, examples | 1-12 |
| A | WO 2020/040282 A1 (KURARAY CO., LTD.) 27 February 2020 (2020-02-27) claims, examples | 1-12 |
| P, A | WO 2022/014390 A1 (MITSUI CHEMICALS, INC.) 20 January 2022 (2022-01-20) claims, examples | 1-12 |
| P, A | WO 2022/210019 A1 (MITSUI CHEMICALS, INC.) 06 October 2022 (2022-10-06) claims, examples | 1-12 |
| P, A | WO 2022/196715 A1 (MITSUI CHEMICALS, INC.) 22 September 2022 (2022-09-22) claims, examples | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 March 2023** | **14 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/000145**

| Patent document cited in search report | Publication date (day/month/year) | Patent family member(s) | Publication date (day/month/year) |
|---|---|---|---|
| JP 63-154739 A | 28 June 1988 | (Family: none) | |
| JP 53-125497 A | 01 November 1978 | GB 1590056 A<br>claims, examples<br>DE 2715413 A1<br>FR 2386574 A1<br>NL 7803628 A | |
| JP 04-366168 A | 18 December 1992 | (Family: none) | |
| WO 2020/040282 A1 | 27 February 2020 | US 2021/0179778 A1<br>claims, examples<br>EP 3842471 A1<br>CN 112601776 A<br>KR 10-2021-0048486 A | |
| WO 2022/014390 A1 | 20 January 2022 | (Family: none) | |
| WO 2022/210019 A1 | 06 October 2022 | (Family: none) | |
| WO 2022/196715 A1 | 22 September 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014231452 A
- JP S4860193 A
- JP S53125497 A
- JP S63154739 A
- WO 03085029 A
- JP 2022003322 A